# EUROPEAN PATENT APPLICATION

(11) **EP 4 538 747 A1**
(43) Date of publication of application: **16.04.2025**
(21) Application number: 24201222.7
(22) Date of filing: 18.09.2024
(51) Int. Cl.: G01S 19/21, G01S 19/36, G01S 19/43

(54) **DUAL GNSS RECEIVER NAVIGATION FUNCTIONALITY SYSTEM WITH GNSS INTERFERENCE MITIGATION**

(30) Priority: 13.10.2023 US 202318486714
(71) Applicant: Honeywell International Inc., Charlotte, NC 28202 (US)
(72) Inventor: BARANEK, Radek, Charlotte, 28202 (US); SOPATA, Milan, Charlotte, 28202 (US); STENCEL, Vit, Charlotte, 28202 (US); CIOACA, Radu, Charlotte, 28202 (US)
(74) Representative: Haseltine Lake Kempner LLP

(57) **Abstract**

Embodiments are directed to improving blended GNSS/inertial navigation system tolerance to external GNSS interference. A plurality of RF nulling circuits is coupled to at least two antennas and to the inputs of dual GNSS-receivers. The RF nulling circuits provide phase shift configuration data from RF signals input from the antennas to a virtual antenna position estimator. The virtual antenna position estimator determines virtual antenna positions based on the physical antenna position and the phase shift configuration data from each RF nulling circuit. The virtual antenna position estimator then provides the virtual antenna positions to a navigation system for determining at least one navigation parameter of the vehicle.

## Description

### BACKGROUND

In an increasingly globalized economy, vehicles such as aircraft serve as the conduit for facilitating global commerce. In order to safely navigate through various environments and coordinate effective travel routes, vehicles rely on Global Navigation Satellite System (GNSS) aided navigation technology. These systems facilitate fast and accurate determination of position information, such as lateral position and altitude, to the vehicle via a GNSS receiver. Some systems on the vehicle may also rely on GNSS information to enhance or supplement the functionality supported by a given system.

However, utilizing GNSS technology does not come without risks. For instance, a radio frequency (RF)-emitting source may broadcast signals that render GNSS equipment inoperable (known as GNSS "jamming"), or may feed false signals to the GNSS equipment that causes the equipment to receive the false signals instead of the true signals sent by GNSS satellites (known as GNSS "spoofing"). GNSS jamming and GNSS spoofing are examples of GNSS interference, which adversely impact GNSS equipment during navigation and may lead to a wide variety of serious and potentially consequences, most notably the high risk of crash. When GNSS interference is present, systems that utilize GNSS information ordinarily cannot function as reliable navigation tools.

Therefore, a need exists to enable continuous and accurate GNSS navigation functionality even when GNSS interference is present.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of the various patents, applications and publications as identified herein to provide yet further embodiments.

In one embodiment, a system is disclosed. The system comprises at least two antennas. Each of the at least two antennas is configured for receiving Global Navigation Satellite System (GNSS) signals. The system comprises a first radio frequency (RF) nulling circuit having a main port coupled to a first antenna of the at least two antennas and an auxiliary port coupled to a first auxiliary antenna of the at least two antennas. The system comprises a second RF nulling circuit having a main port coupled to a second antenna of the at least two antennas and an auxiliary port coupled a second auxiliary antenna of the at least two antennas. The system comprises a first GNSS receiver coupled to an output of the first RF nulling circuit, and a second GNSS receiver coupled to an output of the second RF nulling circuit. The system comprises a navigation system coupled to an output of the first GNSS receiver and an output of the second GNSS receiver. The system comprises a virtual antenna position estimator coupled to the navigation system and coupled to receive phase shift configuration data from the first RF nulling circuit and the second RF nulling circuit. The virtual antenna position estimator is configured to calculate virtual antenna positions based on the phase shift configuration data and physical positions of the at least two antennas. The virtual antenna position estimator is configured to provide the virtual antenna positions to the navigation system. The navigation system is configured to determine at least one navigation parameter based on the virtual antenna positions.

In another embodiment a method is disclosed. The method comprises receiving radio frequency (RF) signals from each of a plurality of antennas coupled to a vehicle. Each antenna is configured to receive signals from a Global Navigation Satellite System (GNSS). The method comprises receiving a physical antenna position of each of the plurality of antennas. The method comprises receiving phase shift configuration data of the RF signals acquired from each of the plurality of antennas from an output of each of a plurality of RF nulling circuits. The method comprises determining virtual antenna positions corresponding to the output of each of the plurality of RF nulling circuits based on the physical antenna positions and the respective phase shift configuration data from each of the RF nulling circuits. The method comprises providing GNSS information derived from the RF signals and the virtual antenna positions to a navigation system.

In yet another embodiment, a program product is disclosed. The program product comprises a non-transitory processor-readable medium on which program instructions configured to be executed by at least one processor are embodied. By executing the program instructions, the at least one processor is configured to receive radio frequency (RF) signals from each of a plurality of antennas coupled to a vehicle. Each antenna is configured to receive signals from a Global Navigation Satellite System (GNSS). The at least one processor is configured to receive a physical antenna position of each of the plurality of antennas. The at least one processor is configured to receive phase shift configuration data of the RF signals acquired from each of the plurality of antennas from an output of each of a plurality of RF nulling circuits. The at least one processor is configured to determine virtual antenna positions corresponding to the output of each of the plurality of RF nulling circuits based on the physical antenna positions and the respective phase shift configuration data from each of the RF nulling circuits. The at least one processor is configured to provide GNSS information derived from the RF signals and the virtual antenna positions to a navigation system.

Additional embodiments are disclosed, as subsequently described.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, as briefly summarized below and as further described in the detailed description.
Figure 1 depicts a block diagram of a system including a dual GNSS receiver configuration coupled to two antennas, as described in one or more embodiments.
Figure 2 depicts a block diagram of a system including a dual GNSS receiver configuration coupled to three antennas, as described in one or more embodiments.
Figure 3 depicts a block diagram of a system including a dual GNSS receiver configuration coupled to four antennas, as described in one or more embodiments.
Figure 4 depicts a flow diagram of a method for operating a GNSS interference mitigation system, as described in one or more embodiments.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

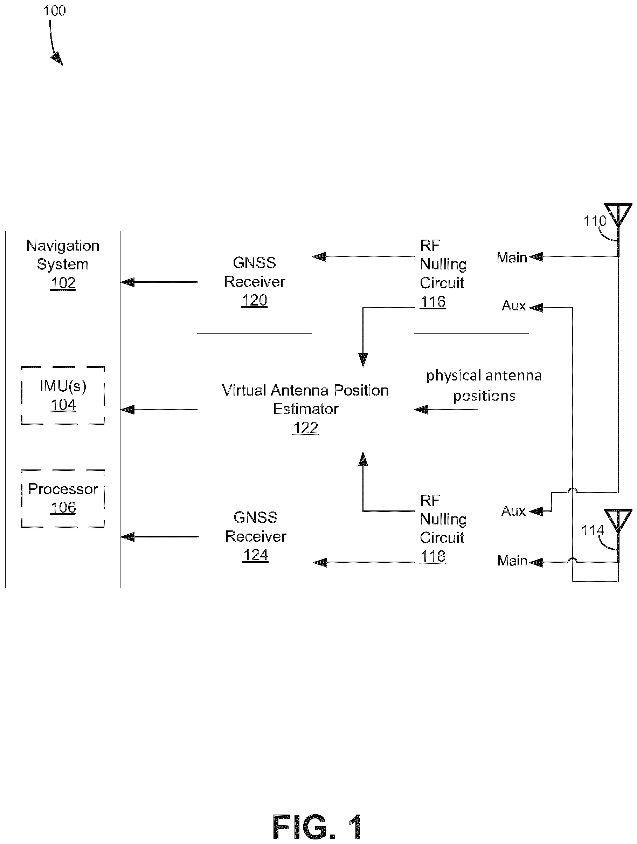

Figure 1 depicts a block diagram of an exemplary GNSS interference mitigation system ("system") 100 in which the GNSS interference mitigation techniques described herein can be utilized. System 100 is configured to be coupled to a vehicle (not shown in Figure 1). For example, system 100 can be mounted on the exterior or interior portions of the vehicle, and can be coupled to other systems on the vehicle not explicitly shown in Figure 1. In some embodiments, system 100 is distributed on different portions of the vehicle, which can be electrically coupled together through a communication bus or other suitable interface. Use of the term "vehicle" is not intended to be limiting and includes all classes of vehicles falling within the ordinary meaning of the term. This would include but not limited to aerial traversing vehicles, water traversing vehicles, and land traversing vehicles. Throughout the disclosure, the vehicle may be further illustrated as an aircraft with the understanding that the principles described herein apply to other vehicles where applicable.

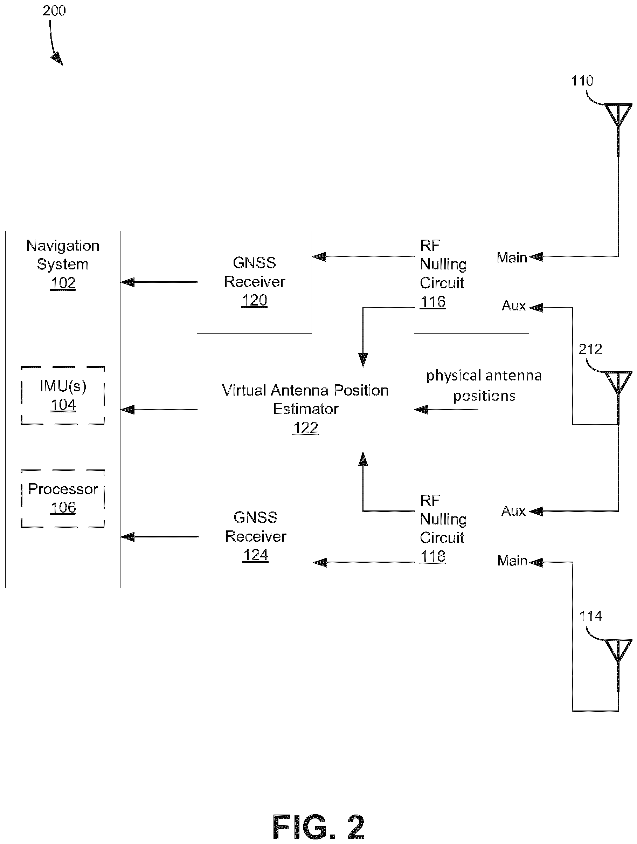

In the embodiment of Figure 1, system 100 includes a dual antenna configuration with two antennas 110, 114. As further described in the context of Figures 2-3, additional antennas may be included in the system. Each antenna 110, 114 is configured to receive radio frequency (RF) signals, including signals from a GNSS system. A GNSS system can be embodied as a plurality of satellites in a constellation that transmit certain RF signals (referred to as "GNSS signals") that include information (e.g., carrier phase or satellite ephemeris data) that is usable for determining a position of the receiver. Example GNSS systems include the Global Positioning System (GPS), the Globalnaya Navigatsionnaya Sputnikovaya Sistema (GLONASS), Galileo, Beidou, and the like.

System 100 further includes two RF nulling circuits 116, 118, coupled to the antennas 110, 114. Each RF nulling circuit 116, 118 can be implemented as a separate device or unit comprising circuitry configured to nullify, or attenuate, components of the RF signals received from antennas 110, 114 that correspond to GNSS interference. Each RF nulling circuit 116, 118 includes a main input port ("main port" or "main") and an auxiliary input port ("auxiliary port" or "aux") that receives RF signals from one of the antennas 110, 114. In the embodiment of Figure 1, the main port of RF nulling circuit 116 receives the GNSS signals from antenna 110 while the auxiliary port of RF nulling circuit 116 receives the GNSS signals from antenna 114. The main port of RF nulling circuit 118 receives the GNSS signals from antenna 114 while the auxiliary port of RF nulling circuit 118 receives the GNSS signals from antenna 110. When no GNSS interference is present, each RF nulling circuit operates in a normal/bypass mode in which the GNSS signals received at the main port are output to the respective GNSS receiver. Referring to Figure 1, RF nulling circuit 116 outputs the GNSS signals from antenna 110 to GNSS receiver 120 during normal mode operation, and RF nulling circuit 118 outputs the GNSS signals from antenna 114 to GNSS receiver 124. While operating in a normal mode, the RF signals from the auxiliary ports are not output to the GNSS receivers 120, 124. When GNSS interference is present, such as GNSS jamming and spoofing, each RF nulling circuit 116, 118 combines the RF signals from the main port and the auxiliary port to produce phase-shifted RF signals that are then output to the respective GNSS receiver coupled to the RF nulling circuit.

Each RF nulling circuit 116, 118 is coupled to a respective GNSS receiver 120, 124. Each GNSS receiver 120, 124 comprises processing circuitry configured to determine GNSS information from the RF signal output received from respective RF nulling circuits 116, 118. For example, in some embodiments each GNSS receiver 120, 124 determines time and location information from the RF signals output from the respective RF nulling circuit 116, 118. Each GNSS receiver 120, 124 outputs the GNSS information of the RF signals received from the respective antennas 110, 114 to navigation system 102.

System 100 includes a virtual antenna position estimator 122 coupled to both RF nulling circuits 116, 118. Virtual antenna position estimator 122 receives or determines the physical positions of antennas 110, 114 on the vehicle. As used herein, the term "physical antenna positions" refers to the actual position of each antenna as located on the vehicle in three-dimensional space and in the coordinate system fixed with the vehicle. Such information can be provided to virtual antenna position estimator 122 from another system coupled to the vehicle (not shown in Figure 1). In some embodiments, virtual antenna position estimator 122 stores the physical antenna positions of antennas 110, 114 in memory or accesses a database to determine the physical antenna positions. Additionally, virtual antenna position estimator 122 receives the phase shift configuration data from each RF nulling circuit 116, 118. In the case of no GNSS interference, there will be no phase shift determined by a RF nulling circuit because there is no combining of the signals between the two antennas 110, 114. However, if GNSS interference is present, the combined RF signals will have a corresponding phase shift from the main input signal; this phase shift is provided to virtual antenna position estimator 122.

Virtual antenna position estimator 122 is configured to determine the virtual antenna positions of each RF output of RF nulling circuits 116, 118 based on the phase shift configuration data received by each RF nulling circuit 116, 118 and the known physical antenna positions of each antenna 110, 114. As used herein, the term "virtual antenna positions" refers to the effective position of each RF output of RF nulling circuit compensated for GNSS interference, i.e., the position that would be determined for each GNSS receiver in the absence of GNSS interference. When GNSS interference is not present, the virtual antenna positions are identical to the physical antenna positions connected to the main port of an RF nulling circuit. However, when GNSS interference is present the perceived antenna position determined by each GNSS receiver 120, 124 is generally no longer consistent with the known physical antenna positions of each antenna.

System 100 further includes navigation system 102 coupled to each GNSS receiver 120, 124 and virtual antenna position estimator 122. Navigation system 102 receives the GNSS information (e.g., pseudoranges, carrier phase, and position information) determined from GNSS receivers 120, 124 and the virtual antenna positions of the RF outputs of RF nulling circuits 116, 118 from virtual antenna position estimator 122. Navigation system 102 uses the virtual antenna positions and the GNSS information from GNSS receivers 120, 124 in determining one or more navigation parameters related to vehicle navigation. In some embodiments, navigation system includes one or more inertial measurement units (IMUs) 104 configured to determine inertial data, which are then blended in the navigation system 102 with the GNSS information provided from GNSS receivers 120, 124 and virtual antenna position estimator 122. The IMU 104 in some embodiments comprises one or more gyroscopes, one or more accelerometers, and optionally one or more magnetometers. Additionally, navigation system 102 may include at least one processor 106 that uses the GNSS information for performing navigation functions for the vehicle, including calculating navigation parameters such as position, velocity, heading, and the like.

Processor 106, or any of the processing systems included in system 100 (e.g., the processing functions performed by GNSS receivers 120, 124, and by virtual antenna position estimator 122) may include any one or combination of processors, microprocessors, digital signal processors, application specific integrated circuits, field programmable gate arrays, and/or other similar variants thereof. These processing systems may also include, or function with, software programs, firmware, or other computer readable instructions for carrying out various process tasks, calculations, and control functions, used in the methods described below. These instructions are typically tangibly embodied on any storage media (or computer readable media) used for storage of computer readable instructions or data structures.

System 100 acts as a GNSS-enhanced navigation system that blends GNSS-acquired information with non-GNSS information to determine navigation parameters of the vehicle. Generally, GNSS interference risks inoperability or use of inaccurate information for these blended systems. However, system 100 can utilize GNSS functionality even when GNSS interference is present. Accordingly, system 100 can implement accurate GNSS functionality that is uninterrupted by GNSS interference.

Figure 2 depicts a block diagram of another exemplary embodiment of a GNSS interference mitigation system. System 200, including each of its components, functions similarly to their counterparts shown and described with respect to Figure 1, with some differences as further described. In the embodiment of Figure 2, system 200 includes three antennas 110, 114, and 212 coupled to two RF nulling circuits 116, 118. Antenna 110 is coupled only to RF nulling circuit 116 and feeds RF signals received from a GNSS system to the main port of RF nulling circuit 116. In similar fashion, antenna 114 is coupled only to RF nulling circuit 118 and feeds RF signals received from a GNSS system to the main port of RF nulling circuit 118. Both RF nulling circuits 116, 118 share a common antenna 212 that feeds RF signals to the auxiliary ports of both nulling circuits.

When no GNSS interference is present, the RF signals from antenna 110 are output from RF nulling circuit 116 to GNSS receiver 120 and the RF signals from antenna 114 are output from RF nulling circuit 118 to GNSS receiver 124. When GNSS interference is detected, the RF signals from antenna 212 are combined at both RF nulling circuits 116, 118 with the RF signals from respective antennas 110, 114. The phase shift configuration data from the combined signals from antennas 110 and 212 are output from RF nulling circuit 116 to virtual antenna position estimator 122. Likewise, the phase shift configuration data from the combined signals from antennas 114 and 212 are output from RF nulling circuit 118 to virtual antenna position estimator 122. The phase shift configuration data is used by the virtual antenna position estimator 122 to determine the virtual positions of each RF output of RF nulling circuit 116, 118, and provides the virtual positions to navigation system 102 for determining navigation parameters of the vehicle.

In some embodiments, navigation system 102 operates as a dual receiver heading functionality system that is configured to determine a heading of the vehicle based on the GNSS information provided by GNSS receivers 120, 124 and the virtual antenna positions of each RF output of RF nulling circuit. For example, navigation system 102 calculates the heading of the vehicle using the GNSS information supplied by each GNSS receiver 120, 124 and the difference in the virtual antenna position between each antenna. The use of these virtual antenna positions provides a check in the event that GNSS interference is present. Specifically, when GNSS interference is present, the virtual antenna positions determined from the phase shift configuration data may be different than the known physical antenna positions on the vehicle. To compensate for effects from GNSS interference, navigation system 102 uses the computed virtual antenna positions instead of the known physical antenna positions when determining the heading of the vehicle.

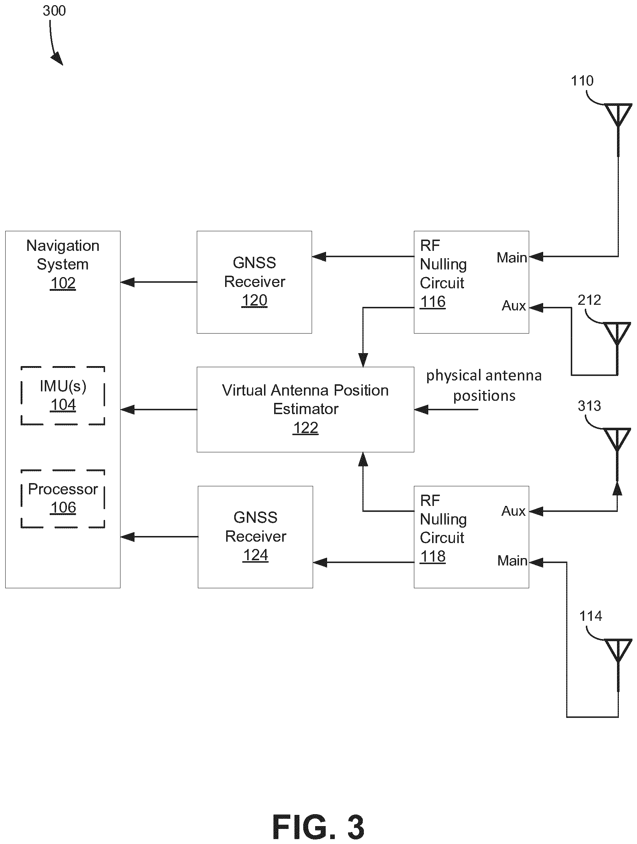

Figure 3 depicts another exemplary embodiment of a GNSS interference mitigation system 300. System 300, including each of its components, functions similarly to their counterparts shown and described with respect to Figures 2-3, with some differences as further described. In the embodiment of Figure 3, system 300 includes four antennas 110, 114, 212, 313 coupled to two RF nulling circuits 116, 118. In particular, each RF nulling circuit is coupled to different antennas. RF nulling circuit 116 is coupled to antennas 110 and 212, while RF nulling circuit 118 is coupled to antennas 114 and 313. In the coupling scheme of RF nulling circuit 116, antenna 110 provides RF signals to the main port of RF nulling circuit 116 and antenna 212 provides RF signals to the auxiliary port of RF nulling circuit 116. While no GNSS interference is present, only the RF signals from antenna 110 are provided to GNSS receiver 120. However, in the presence of GNSS interference, RF nulling circuit 116 outputs a combination of the RF signals from antenna 110 and antenna 212. RF nulling circuit 118 operates in a similar fashion, in which antenna 114 provides RF signals to the main port while antenna 313 provides RF signals to the auxiliary port.

Because each GNSS receiver 120, 124 outputs GNSS information specific to different antennas, the effects from GNSS interference can be more easily compensated for when determining the heading of the vehicle or other navigation parameters. Additionally, the use of additional antennas provides redundancy in the case of a fault or malfunction in the system 300. Although Figures 1-3 depicts embodiments of two to four antennas, any plurality of antennas can be used. For example, more than four antennas can be used to provide additional data redundancy to improve the accuracy of GNSS information provided to navigation system 102. In some embodiments, additional GNSS receivers and RF nulling circuits can also be used.

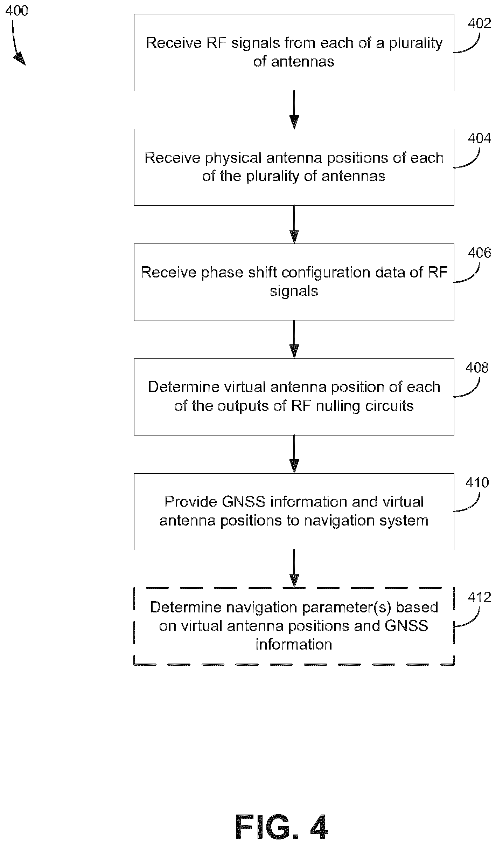

Figure 4 depicts a flow diagram of a method 400 for operating a GNSS interference mitigation system. Method 400 may be implemented via the techniques described with respect to Figures 1-3, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 400 includes receiving RF signals from each of a plurality of antennas at block 402. Each antenna is configured for receiving GNSS signals from a GNSS system. However, when GNSS interference is present, the antennas may receive other RF signals that do not originate from a GNSS system. Method 400 also receives the physical antenna positions of each of the plurality of antennas at block 404. Such information can be stored in memory and accessible by a virtual position antenna estimator as described in Figures 1-3. At block 406, method 400 receives phase shift configuration data of the RF signals acquired from each of the plurality of antennas. The phase shift configuration data is determined by combining the RF signals received from different antennas at different ports of an RF nulling circuit. The phase shift configuration data can also be received from multiple RF nulling circuits. In some embodiments, the RF nulling circuits are coupled to the same antennas, as shown in Figure 1; however, in other embodiments, the RF nulling circuits are coupled to different antennas. In these embodiments, the RF nulling circuit can be coupled to a shared antenna, as shown in Figure 2. Each RF nulling circuit is configured to reduce the effects of GNSS interference by combining the RF signals of different antennas.

Method 400 proceeds to block 408 and determines the virtual antenna position of each RF output of the plurality of RF nulling circuits. The virtual antenna position for a given RF output of an RF nulling circuit is determined from the physical antenna positions and the phase shift configuration data corresponding to the antenna. During periods of GNSS interference, the virtual antenna positions will likely depart from the known physical antenna positions on the vehicle. To better compensate for GNSS interference, method 400 provides the GNSS information associated with the RF signals received from each RF nulling circuit as well as the virtual antenna positions to a navigation system at block 410. In some embodiments, the navigation system comprises at least one IMU or other inertial sensors, as well as processing circuitry.

Optionally, method 400 proceeds to block 412 and determines one or more navigation parameters based on the virtual antenna positions and GNSS information provided in block 410. The navigation system can use the GNSS information along with inertial data from inertial sensors to determine navigation parameters. For example, the navigation system utilizes the virtual antenna positions and the GNSS information to determine a heading of the vehicle. By utilizing virtual antenna positions, the navigation system can determine the heading of the vehicle using GNSS information even during periods in which GNSS interference is present.

The methods and techniques described herein may be implemented at least in part in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as erasable programmable read-only memory (EPROM), electrically-erasable programmable read-only memory (EEPROM), and flash memory devices; magnetic disks such as internal hard disks and removable disks; magneto-optical disks; and the like. Any of the foregoing may be supplemented by, or incorporated in, specially-designed application specific integrated circuits (ASICs).

### EXAMPLE EMBODIMENTS

Example 1 includes a system, comprising: at least two antennas, each of the at least two antennas configured for receiving Global Navigation Satellite System (GNSS) signals; a first radio frequency (RF) nulling circuit having a main port coupled to a first antenna of the at least two antennas and an auxiliary port coupled to a first auxiliary antenna of the at least two antennas; a second RF nulling circuit having a main port coupled to a second antenna of the at least two antennas and an auxiliary port coupled a second auxiliary antenna of the at least two antennas, a first GNSS receiver coupled to an output of the first RF nulling circuit; a second GNSS receiver coupled to an output of the second RF nulling circuit; a navigation system coupled to an output of the first GNSS receiver and an output of the second GNSS receiver; and a virtual antenna position estimator coupled to the navigation system and coupled to receive phase shift configuration data from the first RF nulling circuit and the second RF nulling circuit, wherein the virtual antenna position estimator calculates virtual antenna positions based on the phase shift configuration data and physical positions of the at least two antennas and provides the virtual antenna positions to the navigation system, wherein the navigation system determines at least one navigation parameter based on the virtual antenna positions.

Example 2 includes the system of Example 1, wherein only two antennas are coupled to the first RF nulling circuit and the second RF nulling circuit, wherein the first auxiliary antenna coupled to the first RF nulling circuit is the second antenna, wherein the second auxiliary antenna coupled to the second RF nulling circuit is the first antenna.

Example 3 includes the system of any of Examples 1-2, wherein the at least two antennas comprises three antennas, wherein the first auxiliary antenna is the second auxiliary antenna.

Example 4 includes the system of any of Examples 1-3, wherein the at least two antennas comprises four antennas, wherein the first auxiliary antenna is distinct from the second auxiliary antenna.

Example 5 includes the system of any of Examples 1-4, wherein the at least one navigation parameter includes a heading of a vehicle, wherein the navigation system utilizes the virtual antenna positions for GNSS heading functions performed by the navigation system.

Example 6 includes the system of any of Examples 1-5, wherein when no GNSS interference is detected, the first and second RF nulling circuit is configured to respectively output RF signals from the first and the second antenna to the respective first and the second GNSS receiver, wherein when GNSS interference is detected, the first RF nulling circuit is configured to output a combined RF signal from the first antenna and the first auxiliary antenna to the first GNSS receiver, wherein when GNSS interference is detected, the second RF nulling circuit is configured to output a combined RF signal from the second antenna and the second auxiliary antenna to the second GNSS receiver.

Example 7 includes the system of any of Examples 1-6, wherein the first GNSS receiver is configured to determine first GNSS information from RF signals received from the output of the first RF nulling circuit, wherein the second GNSS receiver is configured to determine second GNSS information from the RF signals received from the output of the second RF nulling circuit, wherein the navigation system is configured to determine the at least one navigation parameter based on the first and second GNSS information.

Example 8 includes the system of any of Examples 1-7, wherein the phase shift configuration data includes a phase shift between an RF signal received at the main port and an RF signal received at the auxiliary port.

Example 9 includes the system of any of Examples 1-8, wherein the first and second RF nulling circuit is configured to attenuate RF signals associated with GNSS interference.

Example 10 includes a method, comprising: receiving radio frequency (RF) signals from each of a plurality of antennas coupled to a vehicle, wherein each antenna is configured to receive signals from a Global Navigation Satellite System (GNSS); receiving a physical antenna position of each of the plurality of antennas; receiving phase shift configuration data of the RF signals from an output of each of a plurality of RF nulling circuits; determining virtual antenna positions corresponding to the output of each of the plurality of RF nulling circuits based on the physical antenna positions and the respective phase shift configuration data from each of the RF nulling circuits; and providing GNSS information derived from the RF signals and the virtual antenna positions to a navigation system.

Example 11 includes the method of Example 10, comprising: determining at least one navigation parameter based on the virtual antenna positions and the GNSS information.

Example 12 includes the method of any of Examples 10-11, wherein the plurality of antennas comprises a first antenna and a second antenna, wherein the first antenna is coupled to a main port of a first RF nulling circuit and to an auxiliary port of a second RF nulling circuit, wherein the second antenna is coupled to a main port of a second RF nulling circuit and to an auxiliary port of the first RF nulling circuit, wherein determining phase shift configuration data comprises determining a phase shift between RF signals received from the first antenna and RF signals received from the second antenna.

Example 13 includes the method of any of Examples 10-12, wherein the plurality of antennas comprises a first antenna, a second antenna, and a third antenna, wherein the first antenna is coupled to a main port of a first RF nulling circuit, wherein the second antenna is coupled to a main port of a second RF nulling circuit, wherein the third antenna is coupled to an auxiliary port of the first RF nulling circuit and to an auxiliary port of the second RF nulling circuit, wherein determining phase shift configuration data comprises determining a first phase shift between RF signals received from the first antenna and RF signals received from the third antenna, and determining a second phase shift between RF signals received from the second antenna and the RF signals received from the third antenna.

Example 14 includes the method of any of Examples 10-13, wherein the plurality of antennas comprises a first antenna, a second antenna, a third antenna, and a fourth antenna, wherein the first antenna is coupled to a main port of a first RF nulling circuit, wherein the second antenna is coupled to an auxiliary port of the first RF nulling circuit, wherein the third antenna is coupled to a main port of a second RF nulling circuit, wherein the fourth antenna is coupled to an auxiliary port of the second RF nulling circuit, wherein determining phase shift configuration data comprises determining a first phase shift between RF signals received from the first antenna and RF signals received from the second antenna, and determining a second phase shift between RF signals received from the third antenna and RF signals received from the fourth antenna.

Example 15 includes the method of any of Examples 11-14, wherein the at least one navigation parameter includes a heading of the vehicle, wherein determining the at least one navigation parameter comprises utilizing the virtual antenna positions in performing GNSS heading functions by a navigation system.

Example 16 includes the method of any of Examples 10-15, wherein the plurality of antennas comprises a first antenna, a second antenna, a first auxiliary antenna, and a second auxiliary antenna, comprising: outputting RF signals from the first antenna to a first GNSS receiver when no GNSS interference is present, outputting RF signals from the second antenna to a second GNSS receiver when no GNSS interference is present, outputting combined RF signals from the first antenna and the first auxiliary antenna to the first GNSS receiver when GNSS interference is present, and outputting combined RF signals from the second antenna and the second auxiliary antenna to the second GNSS receiver when GNSS interference is present.

Example 17 includes the method of any of Examples 10-16, wherein the plurality of antennas comprises a first antenna and a second antenna, and comprising: determining first GNSS information from RF signals received from the first antenna; determining second GNSS information from RF signals received from the second antenna; and determining at least one navigation parameter based on the first GNSS information and the second GNSS information.

Example 18 includes the method of any of Examples 10-17, comprising attenuating RF signals associated with GNSS interference received from at least one of the plurality of antennas.

Example 19 includes a program product comprising a non-transitory processor-readable medium on which program instructions configured to be executed by at least one processor are embodied, wherein by executing the program instructions, the at least one processor is configured to: receive radio frequency (RF) signals from each of a plurality of antennas coupled to a vehicle, wherein each antenna is configured to receive signals from a Global Navigation Satellite System (GNSS); receive a physical antenna position of each of the plurality of antennas; receive phase shift configuration data of the RF signals acquired from each of the plurality of antennas from an output of each of a plurality of RF nulling circuits; determine virtual antenna positions corresponding to the output of each of the plurality of RF nulling circuits based on the physical antenna positions and the respective phase shift configuration data from each of the RF nulling circuits; and provide GNSS information derived from the RF signals and the virtual antenna positions to a navigation system.

Example 20 includes the program product of Example 19, wherein the at least one processor is configured to determine at least one navigation parameter based on the virtual antenna positions and the GNSS information.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system, comprising:
at least two antennas, each of the at least two antennas configured for receiving Global Navigation Satellite System (GNSS) signals;
a first radio frequency (RF) nulling circuit having a main port coupled to a first antenna of the at least two antennas and an auxiliary port coupled to a first auxiliary antenna of the at least two antennas;
a second RF nulling circuit having a main port coupled to a second antenna of the at least two antennas and an auxiliary port coupled a second auxiliary antenna of the at least two antennas,
a first GNSS receiver coupled to an output of the first RF nulling circuit;
a second GNSS receiver coupled to an output of the second RF nulling circuit;
a navigation system coupled to an output of the first GNSS receiver and an output of the second GNSS receiver; and
a virtual antenna position estimator coupled to the navigation system and coupled to receive phase shift configuration data from the first RF nulling circuit and the second RF nulling circuit,
wherein the virtual antenna position estimator calculates virtual antenna positions based on the phase shift configuration data and physical positions of the at least two antennas and provides the virtual antenna positions to the navigation system,
wherein the navigation system determines at least one navigation parameter based on the virtual antenna positions.

2. The system of claim 1, wherein only two antennas are coupled to the first RF nulling circuit and the second RF nulling circuit, wherein the first auxiliary antenna coupled to the first RF nulling circuit is the second antenna, wherein the second auxiliary antenna coupled to the second RF nulling circuit is the first antenna.

3. The system of claim 1, wherein the at least two antennas comprises three antennas, wherein the first auxiliary antenna is the second auxiliary antenna.

4. The system of claim 1, wherein the at least two antennas comprises four antennas, wherein the first auxiliary antenna is distinct from the second auxiliary antenna.

5. The system of claim 1, wherein the at least one navigation parameter includes a heading of a vehicle, wherein the navigation system utilizes the virtual antenna positions for GNSS heading functions performed by the navigation system.

6. The system of claim 1,
wherein when no GNSS interference is detected, the first and second RF nulling circuit is configured to respectively output RF signals from the first and the second antenna to the respective first and the second GNSS receiver,
wherein when GNSS interference is detected, the first RF nulling circuit is configured to output a combined RF signal from the first antenna and the first auxiliary antenna to the first GNSS receiver,
wherein when GNSS interference is detected, the second RF nulling circuit is configured to output a combined RF signal from the second antenna and the second auxiliary antenna to the second GNSS receiver.

7. The system of claim 1, wherein the first GNSS receiver is configured to determine first GNSS information from RF signals received from the output of the first RF nulling circuit, wherein the second GNSS receiver is configured to determine second GNSS information from the RF signals received from the output of the second RF nulling circuit,
wherein the navigation system is configured to determine the at least one navigation parameter based on the first and second GNSS information.

8. A method, comprising:
receiving radio frequency (RF) signals from each of a plurality of antennas coupled to a vehicle, wherein each antenna is configured to receive signals from a Global Navigation Satellite System (GNSS);
receiving a physical antenna position of each of the plurality of antennas;
receiving phase shift configuration data of the RF signals from an output of each of a plurality of RF nulling circuits;
determining virtual antenna positions corresponding to the output of each of the plurality of RF nulling circuits based on the physical antenna positions and the respective phase shift configuration data from each of the RF nulling circuits; and
providing GNSS information derived from the RF signals and the virtual antenna positions to a navigation system.

9. The method of claim 8, comprising: determining at least one navigation parameter based on the virtual antenna positions and the GNSS information.

10. The method of claim 8, wherein the plurality of antennas comprises a first antenna, a second antenna, and a third antenna, wherein the first antenna is coupled to a main port of a first RF nulling circuit, wherein the second antenna is coupled to a main port of a second RF nulling circuit, wherein the third antenna is coupled to an auxiliary port of the first RF nulling circuit and to an auxiliary port of the second RF nulling circuit,
wherein determining phase shift configuration data comprises determining a first phase shift between RF signals received from the first antenna and RF signals received from the third antenna, and determining a second phase shift between RF signals received from the second antenna and the RF signals received from the third antenna.
